(19) **Europäisches Patentamt / European Patent Office / Office européen des brevets**

(11) **EP 2 071 735 B1**

(12) **EUROPEAN PATENT SPECIFICATION**

(45) Date of publication and mention
of the grant of the patent:
**18.05.2011 Bulletin 2011/20**

(51) Int Cl.:
***H04B 7/005*** (2006.01)

(21) Application number: **07076087.1**

(22) Date of filing: **14.12.2007**

(54) **Method to improve coverage in a communication network**

Verfahren zur Verbesserung der Abdeckung in einem Kommunikationsnetzwerk

Procédé d'amélioration de couverture dans un réseau de communication

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**17.06.2009 Bulletin 2009/25**

(73) Proprietors:
• **Vodafone Group PLC**
**Newbury**
**Berkshire RG14 2FN (GB)**
• **Vodafone Espana, S.A.**
**28108 Alcobendas,**
**Madrid (ES)**
Designated Contracting States:
**ES**

(72) Inventors:
• **Domiguez Romero, Francisco Javier**
**28032 Madrid (ES)**

• **Arranz Arauz, Miguel**
**c/o Vodafone Espana, S.A.**
**28050 Madrid (ES)**
• **Lopez Roman, Javier**
**c/o Vodafone Espana, S.A.**
**28050 Madrid (ES)**

(74) Representative: **Keston, David Arthur et al**
**Vodafone Group Services Ltd.**
**Group Legal (Patents)**
**Vodafone House**
**The Connection**
**Newbury**
**Berkshire RG14 2FN (GB)**

(56) References cited:
**WO-A-03/079574      WO-A-03/107703**
**WO-A-2005/032009    US-A1- 2004 242 257**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Object of the invention.

The present invention relates to a method to optimize the CPICH power in order to get good coverage and good capacity in UMTS network. The optimization is done through the dynamic changes done in the CPICH depending on the traffic of the cell.

Field of the invention.

The present invention is specifically applicable to so-called "*third-generation*" system such as the UMTS terrestrial radio access network (UTRAN).

Background of the invention.

At the moment, the total power for a base station in a CDMA system is divided between common channels and traffic channels. The most important channel of the common channel is the CPICH (Common Pilot Channel) which is the reference for the rest of the channels, and also the reference to attach to the network, so the coverage depends directly on the CPICH power. Summarizing, It is possible to remark that the more CPICH power, the more coverage.

The CPICH power is always constant in all the implementations. To setup this value, there is a trade-off:

- If CPICH is very high, there is less power for traffic, generating capacity problems.
- If CPICH is very low, less coverage.

The coverage is very important, as the need for improved in building and rural coverage is a strong business requirement in UTRAN networks.

The WO2005032009 application describes a method for dynamically allocating power of a pilot channel. The application is based on traffic, but the aim is to balance the traffic between different neighbouring cells through different CPICH power. In the present invention, the CPICH is dynamically adjusted in all the cells of the cluster to maximize the coverage of all the cells at the same time. If the CPICH is modified in isolated cells, there will be problems of EcNo in the neighbouring cells, and there will be problems, of UL traffic peaks in the cells with less CPICH power. The present invention solves these problems trough the use of the dynamic CPICH in cluster of cells.

The WO03107703 application describes a cellular mobile telephone network and a procedure to optimize it. The aim of said patent is tune the CPICH power in order to mainly achieve a coverage area and use other carriers for capacity purpose. Said application does not describe the user location or power available for dedicated channels to tune the CPICH power dynamically. The solution proposed is static, because propose to use high CPICH power for coverage areas and low for capacity as the best way to use all the operators carriers mainly in roll out network phases. The present invention proposes CPICH dynamic changes based on traffic.

The WO03079574 application describes a method for configuring the power output of the pilot channels in a cellular radio network. Said application shows a method to calculate optimum CPICH power of a group of cells in the same frequency, taking into account the radio electrical environment, traffic load and site location. The main difference with the present invention is that the present invention modifies dynamically the CPICH power.

The US6188906 application describes a method for coverage optimization of multifrequency assignment system, wherein reach the balance of traffic between different frequencies. The present invention of CPICH capacity tends to maximize the capacity reducing the power consumed by the common channels. The present invention relates CPICH dynamic coverage want to maximize the coverage in low traffic periods. Everything in the same frequency.

US 2004/0242257 A1 proposes a solution to assure sufficient coverage by automatically adjusting the power level of the pilot signal while minimizing the usage of other resources. This is carried out by establishing individual values of CPICH power per cell instead of the same value for all the cell of a cluster.

Description of the invention.

In order to avoid the problems aforementioned, it is presented the method according to claim 1 to improve coverage in a communication network, object of the present invention. The method is based on the optimization of coverage at certain periods of day where not so much capacity requirements are in place. This could be obtained by an increasing CPICH power (pilot channel) according to certain algorithms. Those algorithms would apply wherever the downlink was limiting, and wherever pollution increase would not worsen Ec/lo below certain safety margins for any user. This will force likely its application to clusters of nodes rather than to isolated nodes.

The algorithm will be based on traffic measurements based on power used of the amplifier available.

Let's consider that minimum CPICH power is based on a parameter *CPICHmin.* This will be the minimum power to be used during the most loaded hours of traffic. This minimum CPICH is the ideal to maximise the capacity of the cell.

But this CPICHmin is not the one that balances the UL and DL. So, the CPICH power can be increased in order to balance the link and maximise the coverage. Let's consider CPICHmax the maximum power to be used in the cell when there is low traffic. This should be calculated based on measurements balancing both UL and DL. That means that in the cell edge, the mobiles will use maximum power for the Uplink communication with the Base Station and the Base Station will use that CPICHmax is in order to reach the mobile. So both are at maximum power, and therefore the UL and DL are balanced.

Finally there will be a threshold of load in the system called "HighLoadPowerUsed" which is a percentage of the total power.

If the traffic = 0, then CPICH = CPICHmax

When the power used by traffic (Ptraffic) > HighLoadPowerUsed then CPICH= CPICHmin

If 0 <= Ptraffic <= HighLoadPowerUsed then:

$$CPICH = \frac{(CPICHmin - CPICHmax)}{HighLoadPowerUsed} \cdot Ptraffic + CPICHmax$$

The curve variation of the CPICH power from CPICHmax to the CPICHmin can be another function, but the concept should be the same.

This has to be applied to a cluster of cells to be defined. The purpose is not to affect the Ec/Io of one cell due to the increase or decrease of the CPICH of the neighbour cell.

In case of a cluster the algorithm is similar. The CPICH power is the same for all the cells and the Ptraffic is the traffic carried average by all the cells.

Brief description of the drawings.

Following, it is briefly described some figures that helps to better understand the invention. The figures also describe an embodiment of the present invention, as non-limitative example:

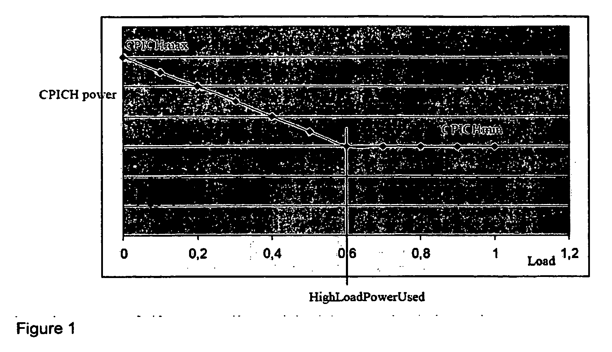

- The figure 1 shows a typical variation curve of the CPICH power from CPICHmax to CPICHmin according to the method described in the present invention.

Preferred embodiment of the invention.

Method to improve coverage in a communication network, object of the present invention, that is based on increasing the CPICH according to a method comprising the steps of:

(i) defining the *CPICHmin* parameter, that is the minimum CPICH used during most loaded hours of traffic;
(ii) defining the *CPICHmax* parameter, that is the maximum power to be used in the cell when there is low traffic in the network;
(iii) defining the *HighLoadPowerUsed* parameter, which is a threshold of load in the system defined as a percentage of the total power;
(iv) defining the variation of the CPICH power from CPICHmax to CPICHmin, also comprising the steps of:

(a) if the traffic = 0, then CPICH = CPICHmax;
(b) when the power used by traffic (Ptraffic) > HighLoadPowerUsed then CPICH=CPICHmin;
(c) if 0<=Ptraffic<=HighLoadPowerUsed then calculate the variation curve.

The variation curve show in **figure 1** is calculated according to:

$$CPICH = \frac{(CPICHmin - CPICHmax)}{HighLoadPowerUsed} \cdot Ptraffic + CPICHmax$$

**Claims**

1. Method to improve coverage in a communication network, comprising the steps of:

(i) defining the *CPICHmin* parameter, that is the minimum power of the common pilot channel, further referred to as CPICH, used during most loaded hours of traffic;
(ii) defining the *CPICHmax* parameter, that is the maximum power to be used in the cell when there is low traffic in the network;
(iii) defining the *HighLoadPowerUsed* parameter, which is a threshold of load in the system defined as a percentage of the total power;
(iv) defining the variation of the CPICH power from CPICHmax to CPICHmin, also comprising the steps of:

(a) if the traffic = 0, then CPICH = CPICHmax;
(b) when the power used by traffic, Ptraffic, HighLoadPowerUsed then CPICH=CPICHmin; (c) if 0<=Ptraffic<=HighLoadPowerUsed then calculate the variation curve according to:

$$CPICH = \frac{(CPICHmin - CPICHmax)}{HighLoadPowerUsed} \cdot Ptraffic + CPICHmax$$

.

2. Method to improve coverage in a communication network, according to claim 1, **characterized in that** CPICHmin is the minimum to maintain safety margins of Ec/Io during the peak traffic.

3. Method to improve coverage in a communication network, according to claim 1 or 2, wherein the power of CPICH is set for a cluster of cells so that:

- the CPICH power is the same for all the cells, and
- the Ptraffic is the average traffic of all the cells.

**Patentansprüche**

1. Verfahren zum Verbessern der Abdeckung in einem Kommunikationsnetz, das die folgenden Schritte beinhaltet:

(i) Definieren des CPICHmin-Parameters, das heißt der Mindestleistung des gemeinsamen Pilotkanals, nachfolgend CPICH genannt, der während der meisten belasteten Verkehrszeiten benutzt wird;
(ii) Definieren des CPICHmax-Parameters, das heißt der Höchstleistung, die in der Zelle benutzt werden soll, wenn der Verkehr auf dem Netz gering ist;
(iii) Definieren des *HighLoadPowerUsed*-Parameters, der eine Lastschwelle in dem System ist, definiert als Prozentanteil der Gesamtleistung;
(iv) Definieren der Variation der CPICH-Leistung von CPICHmax zu CPICHmin, das auch die folgenden Schritte beinhaltet:

(a) wenn Verkehr = 0, dann CPICH = CPICHmax;
(b) wenn von Verkehr benutzte Leistung, Ptraffic, > HighLoadPowerUsed, dann CPICH=CPICHmin;
(c) wenn 0<=Ptraffic<=HighLoadPowerUsed, dann Berechnen der Variationskurve gemäß:

$$CPICH = \frac{(CPICHmin - CPICHmax)}{HighLoadPowerUsed} \cdot Ptraffic + CPICHmax$$

.

2. Verfahren zum Verbessern der Abdeckung in einem Kommunikationsnetz nach Anspruch 1, **dadurch gekennzeichnet, dass** CPICHmin das Minimum ist, um Ec/Io-Sicherheitsmargins zu Spitzenverkehrszeiten zu halten.

3.  Verfahren zum Verbessern der Abdeckung in einem Kommunikationsnetz nach Anspruch 1 oder 2, wobei die Leistung von CPICH für ein Cluster von Zellen so eingestellt wird, dass

    - die CPICH-Leistung für alle Zellen gleich ist, und
    - der Ptraffic der durchschnittliche Verkehr aller Zellen ist.


**Revendications**

1.  Procédé d'amélioration de la couverture dans un réseau de communication, comprenant les étapes consistant à :

    (i) définir le paramètre *CPICHmin,* à savoir la puissance minimum du canal commun pilote, désigné ci-après par l'abréviation CPICH, utilisée pendant les heures de trafic les plus chargées ;
    (ii) définir le paramètre *CPICHmax*, à savoir la puissance maximum destinée à être utilisée dans la cellule lorsqu'il existe un trafic faible dans le réseau ;
    (iii) définir le paramètre *HighLoadPowerUsed*, qui représente un seuil de charge dans le système et qui est défini en tant que pourcentage de la puissance totale ;
    (iv) définir la variation de la puissance du CPICH, allant de *CPICHmax* à *CPICHmin,* comprenant également les étapes suivantes :

    (a) si le trafic = 0, alors CPICH = *CPICHmax* ;
    (b) lorsque la puissance utilisée par le trafic, *Ptraffic, > HighLoadPowerUsed* alors *CPICH=CPICHmin* ;
    (c) si *0<=Ptraffic<=HighLoadPowerUsed* effectuer alors le calcul de la courbe de variation conformément à la formule :

$$CPICH = \frac{(CPICHmin - CPICHmax)}{HighLoadPowerUsed} \cdot Ptraffic + CPICHmax .$$

2.  Procédé d'amélioration de la couverture dans un réseau de communication selon la revendication 1, **caractérisé en ce que** *CPICHmin* constitue la valeur minimum pour maintenir les marges de sécurité de Ec/Io pendant le trafic de pointe.

3.  Procédé d'amélioration de la couverture dans un réseau de communication selon la revendication 1 ou 2, la puissance du CPICH étant définie pour un groupe de cellules de sorte que :

    - la puissance du CPICH est la même pour toutes les cellules, et
    - le terme *Ptraffic* représente le trafic moyen de toutes les cellules.

EP 2 071 735 B1

Figure 1

6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005032009 A
- WO 03107703 A
- WO 03079574 A
- US 6188906 B
- US 20040242257 A1